# EUROPÄISCHE PATENTSCHRIFT

(11) **EP 2 520 424 B1**
(45) Veröffentlichungstag und Bekanntmachung des Hinweises auf die Patenterteilung: **23.10.2013**
(21) Anmeldenummer: 12166901.4
(22) Anmeldetag: 04.05.2012
(51) Int. Cl.: B32B 3/16, B65D 33/20, B65D 65/40

(54) **Verpackungs-Verbundfolie und Verpackung**
Packaging compound film and packaging
Feuille composite pour emballage et emballage

(30) Priorität: 06.05.2011 DE 102011075466
(43) Veröffentlichungstag der Anmeldung: 07.11.2012
(73) Patentinhaber: Constantia Hueck Folien GmbH & Co. KG, 92712 Pirk (DE)
(72) Erfinder: Geillersdörfer, Ingo, 92708 Mantel (DE); Schirrmacher, Christian, Dr., 31275 Lehrte (DE); Eger, Andreas, 92648 Vohenstrauß (DE); Kick, Markus, 92648 Vohenstrauß (DE)
(74) Vertreter: Rau, Schneck & Hübner

(56) Entgegenhaltungen:
- US-A1- 2005 079 322

## Beschreibung

Die Erfindung betrifft eine Verpackungs-Verbundfolie sowie eine mit einer solchen Verpackungs-Verbundfolie realisierte Verpackung.

Derartige Verpackungs-Verbundfolien werden zur Herstellung von wieder verschließbaren Verpackungen eingesetzt. In den Verpackungen können sich verschiedene Güter, insbesondere auch Lebensmittel, befinden. Solche Verpackungs-Verbundfolien und daraus hergestellte, wieder verschließbare Verpackungen sind beispielsweise in der WO 2010/149 996 A1, EP 1 449 789 A1, DE 10 2008 040 046 A1, US 2010/0163563 A1, US 2010/0113241 A1, WO 2009/128 994 A1, WO 2009/111 153 A1, US 2008/0000200 A1, US 2006/0140514 A1, EP 1 719 712 A1, WO 2005/063 588 A1, WO 2005/009 851 A1, DE 103 28 476 B3 sowie DE 103 25 175 A1 beschrieben. Diese bekannten Verpackungs-Verbundfolien und die daraus hergestellten Verpackungen haben oftmals einen komplizierten Aufbau und führen demnach zu hohen Herstellungskosten. Gleiches gilt, wenn die Verpackungs-Verbundfolien außer zur Verpackung eines Gutes auch zu einem anderen Zweck verwendet werden. Beispielsweise zur Übermittlung einer nur für einen bestimmten Empfängerkreis bestimmten und anfänglich verborgenen Information. Um eine derartige Zusatzfunktion zu bieten, sind ähnlich wie bei der Ausgestaltung der Wiederverschlussmöglichkeit einer Verpackung Zusatzelemente, beispielsweise in Form zusätzlicher Klebstreifen und/oder Folienlagen, erforderlich.

In der US 2005/0079322 A1 wird eine Verpackungs-Verbundfolie beschrieben, bei der eine Trägerbahn und eine zweilagige Deckbahn mittels einer durchgehenden Klebstoffschicht miteinander verbunden sind. Im Bereich eines aus der Deckbahn freigeschnittenen Abziehstreifens ist zwischen der Unterseite des Abziehstreifens und der Klebstoffschicht eine zusätzliche Trennschicht vorgesehen, um die Abziehbarkeit des Abziehstreifens zu gewährleisten.

In der DE 699 18 043 T2 wird eine Verpackungs-Verbundfolie beschrieben, bei der eine Trägerbahn und eine ebenfalls zweilagige Deckbahn mittels einer dauerhaften Klebstoffschicht miteinander verbunden sind. In der Klebstoffschicht ist eine Aussparung vorgesehen, innerhalb der ein abziehbarer Aufkleber mittels einer lösbaren druckempfindlichen Klebstoffschicht auf die Trägerbahn geklebt ist. Der Aufkleber ist aus dem Material der Deckbahn gebildet und von der übrigen Deckbahn durch einen Stanzschnitt oder eine Perforation getrennt. Die lösbare druckempfindliche Klebstoffschicht haftet an der Unterseite des Aufklebers, damit dieser nach dem Abziehen von der Verpackungs-Verbundfolie, wie für einen Aufkleber üblich, an einer beliebigen Stelle fern ab von der Verpackungs-Verbundfolie aufgeklebt werden kann.

In der US 6 517 243 B2 wird eine Verpackung aus einer Verpackungs-Verbundfolie beschrieben. Auch bei dieser Verpackungs-Verbundfolie sind eine Trägerbahn und eine zweilagige Deckbahn mittels einer dauerhaften Klebstoffschicht miteinander verbunden. In der Klebstoffschicht ist ebenfalls eine Aussparung vorgesehen, innerhalb der ein abziehbarer Verschlussstreifen mittels einer lösbaren druckempfindlichen Klebstoffschicht auf die Trägerbahn geklebt ist. Der Verschlussstreifen ist aus der Deckbahn freigeschnitten, bleibt aber an einer von der Verpackungsöffnung entfernten Stelle einstückig mit der Deckbahn verbunden. Die lösbare druckempfindliche Klebstoffschicht haftet an der Unterseite des Verschlussstreifens. Eine Aufgabe der Erfindung besteht darin, eine Verpackungs-Verbundfolie anzugeben, mittels derer auf einfache Weise eine mit einer Zusatzfunktion, wie beispielsweise einer Wiederverschließbarkeit, ausgestattete Verpackung hergestellt werden kann.

Diese Aufgabe wird durch eine Verpackungs-Verbundfolie gemäß den Merkmalen des Hauptanspruchs gelöst. Die Verpackungs-Verbundfolie umfasst einen Schichtaufbau mit mindestens
a) einer Trägerbahn,
b) einer ersten Haftvermittlungsschicht und
c) einer Deckbahn,
wobei
d) die erste Haftvermittlungsschicht eine Aussparung aufweist,
e) die Deckbahn mittels der ersten Haftvermittlungsschicht abgesehen von der Aussparung vollflächig und fest auf der Trägerbahn angebracht ist,
f) im Bereich der in der ersten Haftvermittlungsschicht vorgesehenen Aussparung zumindest teilweise eine zweite Haftvermittlungsschicht vorgesehen ist, die eine geringere Haftkraft aufweist als die erste Haftvermittlungsschicht und die lösbar an beiden Seiten der Deckbahn haften kann,
g) die Deckbahn im Bereich der in der ersten Haftvermittlungsschicht vorgesehenen Aussparung lösbar auf der Trägerbahn platziert ist und die Deckbahn im Bereich der in der ersten Haftvermittlungsschicht vorgesehenen Aussparung eine Materialschwächung aufweist, so dass ein im Bereich der in der ersten Haftvermittlungsschicht vorgesehenen Aussparung befindlicher Teil der Deckbahn vollständig von der übrigen Deckbahn und von der Trägerbahn entfernbar ist, und eine freie Oberfläche der Deckbahn an der nach dem Entfernen des Teils der Deckbahn freiliegenden und auf der Trägerbahn verbliebenen zweiten Haftvermittlungsschicht wiederum lösbar anheftbar ist.

Die Verpackungs-Verbundfolie zeichnet sich durch einen günstigen Schichtaufbau aus. Die Trägerbahn und die Deckbahn sind dabei insbesondere an den meisten Stellen mittels der ersten Haftvermittlungsschicht fest miteinander verbunden. Eine Anbringung einer Schicht oder Bahn auf einer anderen Schicht oder Bahn oder eine Verbindung zwischen zwei Schichten oder Bahnen wird hier insbesondere dann als "fest" bezeichnet, wenn die Anbringung oder die Verbindung eine Kaschierfestigkeit (= Verbundhaftung) von mehr als 1 N/15 mm aufweist. Die Schichten oder Bahnen lassen sich dann insbesondere nur schwer oder vorzugsweise auch gar nicht voneinander trennen. Die Deckbahn dient bei diesem Schichtaufbau während der Herstellung der Verpackungs-Verbundfolie und/oder einer daraus gefertigten Verpackung insbesondere als Hitzeschild für die darunter angeordnete und ggf. hitzeempfindlichere Trägerbahn. Die feste, insbesondere praktisch unlösbare Verbindung zwischen der Trägerbahn und der Deckbahn ist im Bereich der in der ersten Haftvermittlungsschicht vorgesehenen Aussparung nicht gegeben. In diesem Bereich ist entweder überhaupt keine oder eine verglichen mit der Haftkraft der ersten Haftvermittlungsschicht geringere Haftung zwischen der Trägerbahn und der Deckbahn vorgesehen. Bei der zweiten Alternative ist zumindest in einem Teilbereich der in der ersten Haftvermittlungsschicht vorgesehenen Aussparung eine zweite Haftvermittlungsschicht mit entsprechend geringerer Haftkraft angeordnet. Die zweite Haftvermittlungsschicht unterscheidet sich insbesondere von der ersten Haftvermittlungsschicht. Die Deckbahn ist bei dieser Alternative mittels der zweiten Haftvermittlungsschicht auf der Trägerbahn angebracht. Die Lösbarkeit der Deckbahn von der Trägerbahn im Bereich der in der ersten Haftvermittlungsschicht vorgesehenen Aussparung ergibt sich also aufgrund der hier vorgesehenen Haftstofffreiheit oder geringeren Haftkraft. Zusätzlich hat die Deckbahn in diesem Bereich eine Materialschwächung, so dass ein im Bereich der in erster Haftvermittlungsschicht vorgesehenen Aussparung befindlicher Teil der Deckbahn von der Trägerbahn abziehbar und/oder entfernbar ist. Insbesondere ist die Materialschwächung der Deckbahn zumindest teilweise in einem Grenzbereich vorgesehen, in dem die erste Haftvermittlungsschicht und die in deren Aussparung angeordnete zweite Haftvermittlungsschicht aneinander grenzen.

Die Fläche der Aussparung ist vorzugsweise kleiner als die Fläche, die mit der ersten Haftvermittlungsschicht belegt ist. Der Flächenanteil der Aussparung bezogen auf die Gesamtfläche der Verpackungs-Verbundfolie liegt insbesondere bei höchstens 50 %, vorzugsweise bei höchstens 10 % und bevorzugt bei höchstens 2 %.

Aufgrund der im Bereich der in der ersten Haftvermittlungsschicht vorgesehenen Aussparung entfernbaren Deckbahn ergeben sich für die Verpackungs-Verbundfolie auf einfache Weise Zusatzfunktionen, wie beispielsweise die Vermittlung einer im Urzustand zunächst durch die Deckbahn verdeckten Information und/oder die Wiederverschließbarkeit einer mittels der Verpackungs-Verbundfolie hergestellten Verpackung, wobei die Haftkraft der vorgesehenen zweiten Haftvermittlungsschicht zum Wiederverschließen der Verpackung verwendet wird. Vorteilhafterweise werden diese Zusatzfunktionen der Verpackungs-Verbundfolie ohne Verwendung zusätzlicher Komponenten erreicht, so dass der Fertigungsaufwand deutlich niedriger liegt als bei bekannten Verpackungs-Verbundfolien mit vergleichbaren Zusatzfunktionen. Insbesondere sind keine zusätzlichen Haftstreifen, zusätzlichen Klebstoffaufträge außen auf der Deckbahn oder Zusatzfolien erforderlich. Die Trägerbahn und die Deckbahn sind bei der Verpackungs-Verbundfolie auch unabhängig von den beschriebenen vorteilhaften Zusatzfunktionen ohnehin vorhanden. Die Herstellung vereinfacht sich auch insofern, als keine zusätzlichen Elemente an der Abpackmaschine, wie z.B. Etikettierer, Streifeneinleger oder Klebstoffauftragswerke benötigt werden.

Vorteilhafte Ausgestaltungen der Verpackungs-Verbundfolie ergeben sich aus den Merkmalen der von Anspruch 1 abhängigen Ansprüche.

Günstig ist eine Ausgestaltung, bei der die Trägerbahn eine Trägerfolie aus Aluminium oder aus einem Kunststoff ist oder die Trägerbahn eine solche Trägerfolie umfasst, wobei der Kunststoff ein Polypropylen, insbesondere ein mono- oder biaxial orientiertes oder ein coextrudiertes Polypropylen oder ein cast-Polypropylen, ein Polyester, insbesondere ein mono- oder biaxial orientiertes oder ein coextrudiertes Polyester, ein Polyamid, insbesondere ein mono- oder biaxial orientiertes oder ein coextrudiertes Polyamid, ein Polylactid, insbesondere ein mono- oder biaxial orientiertes und ein coextrudiertes Polylactid, ein Polyethylen, ein Polyvinylalkohol, ein Zellglas, z.B. Cellophan, oder ein stärkebasierter oder stärkegefüllter Kunststoff ist. Die vorstehenden Materialien eignen sich besonders gut für die Herstellung der Trägerbahn. Dabei kann das für die Trägerfolie verwendete Aluminium insbesondere weich getempert sein. Dann ist es sehr flexibel und lässt sich gut zu einer Verpackungs-Verbundfolie weiter verarbeiten. Die Dicke einer Trägerfolie aus oder mit Aluminium ist vorzugsweise sehr gering. Sie liegt insbesondere zwischen 5 µm und 25 µm, und bevorzugt zwischen 8 µm und 12 µm. Bevorzugte Dicken von Trägerfolien aus oder mit einem Kunststoffen bewegen sich für Polypropylen, Polyester, Polyamid, Polylactid insbesondere zwischen 3 µm und 50 µm, vorzugsweise zwischen 8 µm und 36 µm, und bevorzugt zwischen 12 µm und 23 µm, für Polyethylen insbesondere zwischen 20 µm und 100 µm, vorzugsweise zwischen 20 µm und 60 µm, und zwischen 30 µm und 40 µm. Außerdem kann die Trägerbahn z.B. mit einer zusätzlichen Beschichtung, insbesondere mit einer Barrierebeschichtung versehen, vorzugsweise in Form einer Metallisierung (nur bei Trägerfolien aus oder mit Kunststoff), in Form einer Silikonisierung, in Form einer Lackierung oder in Form einer extrudierten oder coextrudierten Beschichtung. Dadurch lassen sich ggf. erwünschte weitere Eigenschaften der Verpackungs-Verbundfolie einstellen. Ebenso ist es möglich, dass die Trägerfolie, insbesondere, wenn sie aus oder mit einem Kunststoff hergestellt ist, massiv, geschäumt oder gefüllt ausgeführt ist. Günstige Füllstoffe sind z.B. Talkum, Si02, Ti02, Kaolin, BaS04 oder Stärke.

Günstig ist eine weitere Ausgestaltung, bei der die Trägerbahn auf der von der Deckbahn abgewandten Seite gegen sich selbst siegelfähig ist oder mit einem siegelfähigen Belag, insbesondere in Form einer Extrusionsbeschichtung, Lackierung oder einer kaschierten Folie, versehen ist. Dann kann mit der Verpackungs-Verbundfolie sehr einfach eine Verpackung hergestellt werden, indem die Trägerbahn gegen sich selbst gesiegelt wird. Zusätzliche Komponenten, wie ein gesonderter Klebstoff, sind dann ebenso wenig erforderlich wie zusätzliche Prozessschritte zum Auftragen dieses Klebstoffs. Dadurch sinken die Herstellungskosten für die Verpackung.

Günstig ist eine weitere Ausgestaltung, bei der die Deckbahn eine Deckfolie aus einem Kunststoff ist oder eine solche Deckfolie umfasst, wobei der Kunststoff ein Polypropylen, insbesondere ein mono- oder biaxial orientiertes oder ein coextrudiertes Polypropylen oder ein cast-Polypropylen, ein Polyester, insbesondere ein mono- oder biaxial orientiertes oder ein coextrudiertes Polyester, ein Polyamid, insbesondere ein mono- oder biaxial orientiertes oder ein coextrudiertes Polyamid, ein Polylactid, insbesondere ein mono- oder biaxial orientiertes und ein coextrudiertes Polylactid, ein Polyvinylalkohol, ein Zellglas, z.B. Cellophan, oder ein stärkebasierter oder stärkegefüllter Kunststoff ist, und wobei die Deckfolie insbesondere dünner ist als die Trägerbahn und insbesondere eine Dicke zwischen 3 µm und 100 µm, bevorzugt zwischen 8 µm und 36 µm, und äußerst vorzugsweise zwischen 12 µm und 23 µm hat. Die vorstehenden Materialien eignen sich besonders gut für die Herstellung der Deckbahn. Eine geringere Dicke der Deckfolie als diejenige der Trägerbahn begünstigt das Entfernen eines Teils der Deckbahn im Bereich der innerhalb der ersten Haftvermittlungsschicht vorgesehenen Aussparung. Weiterhin kann auch die Deckbahn zur Einstellung ggf. gewünschter besonderer Eigenschaften vorzugsweise mit einer Beschichtung versehen sein, insbesondere in Form einer Coextrusionsschicht, Metallisierung, Silikonisierung oder Lackierung. Außerdem kann eine Bedruckung auf einer oder beiden Seiten der Deckfolie vorgesehen sein, insbesondere im Bereich der in der ersten Haftvermittlungsschicht vorgesehenen Aussparung. Dadurch kann sehr einfach eine Informationsvermittlung erfolgen. Wie die Trägerfolie kann auch die Deckfolie insbesondere massiv, geschäumt oder gefüllt sein. Mögliche Füllstoffe sind z.B. Talkum, SiO₂ TiO₂ oder Stärke.

Günstig ist eine weitere Ausgestaltung, bei der die erste Haftvermittlungsschicht insbesondere aus einem Kaschierkleber gebildet ist. Sie besteht bevorzugt aus einem ein- oder zweikomponentig verarbeitbarem Kaschierklebstoff auf Basis von einem Reinpolyesterharz, von Polyester- oder Polyether-Polyurethan, vorzugsweise gehärtet mit aromatischem oder aliphatischem Polyisocyanat, von einem Polyaminopolyurethan, vorzugsweise gehärtet mit Epichlorhydrinharz, oder von einem Epoxidharz, vorzugsweise gehärtet mit einem Polyamid oder mit einem Aminoamid. Außerdem kann auch ein Kaschierklebstoff auf Basis von ein- oder zweikomponentig verarbeitbarem Poly(meth)acrylat, vorzugsweise gehärtet mit aliphatischem Polyisocyanat, für die erste Haftvermittlungsschicht vorgesehen sein.

Günstig ist eine weitere Ausgestaltung, bei der die erste Haftvermittlungsschicht aus oder mit einem ersten Klebstoff gebildet ist, und die zweite Haftvermittlungsschicht aus oder mit einem zweiten Klebstoff gebildet ist, wobei der erste und der zweite Klebstoff eine gleiche Grundsubstanz aufweisen, insbesondere die gleiche Basis haben, und der zweite Klebstoff mit mindestens einem die Haftfähigkeit reduzierenden Zusatzstoff versehen ist. Der mindestens eine Zusatzstoff macht insbesondere nur einen kleinen Anteil des zweiten Klebstoffs aus, beispielsweise weniger als 30 % des gesamten Gewichts des zweiten Klebstoffs. Die beiden Klebstoffe sind dann also vorzugsweise sehr ähnlich zueinander. Insbesondere sind sie deshalb einander auch in der Handhabung sehr ähnlich, wodurch sich die Herstellung vereinfacht. Die zweite Haftvermittlungsschicht ist insbesondere als eine Kaltsiegelbeschichtung ausgeführt. Die beiden Seiten der Deckbahn können, z.B. aufgrund einer nur einseitig vorgesehenen Bedruckung oder Beschichtung, unterschiedliche Eigenschaften aufweisen. Vorzugsweise ist es deshalb vorgesehen, dass die zweite Haftvermittlungsschicht gegen beide Seiten der Deckbahn haftfähig ist. Bei dem Zusatzstoff des zweiten Klebestoffs kann es sich z.B. um einen die Klebekraft vermindernden Zusatz, wie insbesondere ein Hartharz, vorzugsweise ein Ketonharz, ein Phenolharz, ein Epoxidharz, ein Acrylatharz, ein Harnstoffharz, ein Melaminharz, ein Polyesterharz, oder ein C5- bis C9-Kohlenwasserstoffharz bevorzugt mit hohem Erweichungspunkt handeln. Außerdem kann der Zusatzstoff ein die Klebekraft verminderndes Bindemittel, wie vorzugsweise Nitrocellulose, Celluloseacetobutyrat, Celluloseacetopropionat oder ein anderes Cellulosederivat, oder ein Bindemittel, vorzugsweise auf Basis von Polyvinylbutyral, von Polyvinylacetat oder von Polyvinylchlorid, oder ein Füllstoff, wie vorzugsweise Talkum, Kieselsäure, Kaolin oder Kreide, oder ein Trennmittel, vorzugsweise auf Basis von Silikonöl oder von einem Siloxan, oder ein Wachs, wie vorzugsweise ein Teflonwachs, ein Carnaubawachs, ein Polyethylen-Wachs oder ein Polyamid-Wachs, sein.

Weiterhin kann die zweite Haftvermittlungsschicht insbesondere als ein Polymer auf Basis von Kautschuk oder von Naturlatex, vorzugsweise modifiziert mit Polyacrylat, als ein Polymer auf Basis von Reinacrylat-/Styrolacrylat, als ein Polymer auf Basis von Reinpolyester oder Copolyester, als ein Polymer auf Basis von Polyamid, als ein Polymer auf Basis von Vinylacetat und Vinylacetat-/Ethylen-Copolymer, als ein Polymer auf Basis von Styrolblock-Copolymeren oder -Terpolymeren, als ein Polymer auf Basis von ataktischem Polypropylen, als ein Polymer auf Basis eines Kolophoniumharzes, als ein Polymer auf Basis eines C5-Kohlenwasserstoffharzes mit bevorzugt niedrigem Erweichungspunkt oder als ein Polymer auf Basis eines C9-Kohlenwasserstoffharzes mit bevorzugt niedrigem Erweichungspunkt ausgeführt sein.

Günstig ist eine weitere Ausgestaltung, bei der zwischen der ersten und der zweiten Haftvermittlungsschicht ein haftstofffreier Zwischenraum vorgesehen ist, wobei zumindest teilweise, vorzugsweise überall, zwischen der ersten und der zweiten Haftvermittlungsschicht ein haftstofffreier Abstand von insbesondere 0,5 mm bis 3 mm, vorzugsweise von 1 mm bis 2,5 mm, und bevorzugt von etwa 2 mm, gebildet ist. Der haftstofffreie Zwischenraum begünstigt eine definierte und sichere Trennung zwischen den beiden Haftvermittlungsschichten. Es kommt so zu keiner, auch keiner teilweisen

Überlappung beider Haftvermittlungsschichten im Grenzbereich und damit auch zu keinem im Grenzbereich undefinierten und unerwünschten Haftverhalten zwischen der Deckbahn und der Trägerbahn. Der haftstofffreie Zwischenraum liegt insbesondere gerade im Bereich und bevorzugt unterhalb der Materialschwächung der Deckbahn. Vorzugsweise verläuft die Materialschwächung mittig zwischen der ersten und der zweiten Haftvermittlungsschicht, also insbesondere in der Mitte des haftstofffreien Abstandes. So wird sichergestellt, dass es beim Entfernen der Deckbahn im Bereich der in der ersten Haftvermittlungsschicht vorgesehenen Aussparung nicht versehentlich zu einer Beschädigung der Deckbahn und/oder anderer Teile der Verpackungsverbundfolie außerhalb des Bereichs der in der ersten Haftvermittlungsschicht vorgesehenen Aussparung kommt.

Günstig ist eine weitere Ausgestaltung, bei der die Materialschwächung der Deckbahn in Form von insbesondere gestanzten oder gelaserten Ausnehmungen ausgebildet ist. Die Ausnehmungen können insbesondere als durchgehende Löcher (= Perforation) oder als Sacklöcher ausgestaltet sein. Eine solche Materialschwächung ist einerseits sehr wirksam, um einen Teil der Deckbahn entfernen zu können, und lässt sich andererseits sehr gut herstellen. Die Art der Herstellung der Ausnehmungen, also insbesondere das Ausstanzen oder das Lasern, hinterlässt an der Verpackungs-Verbundfolie typische Spuren, die zumindest mit Hilfe entsprechender Messgeräte erkennbar sind.

Günstig ist eine weitere Ausgestaltung, bei der in dem Bereich der in der ersten Haftvermittlungsschicht vorgesehenen Aussparung an einer der Deckbahn zugewandten Seite der Trägerbahn oder an einer der Trägerbahn zugewandten Seite der Deckbahn eine Bedruckung vorgesehen ist, und die Deckbahn zumindest in dem Bereich der Bedruckung undurchsichtig, insbesondere geschwärzt oder geweißt, ist. Die Schwärzung oder Weißung ist dabei vorzugsweise blickdicht ausgeführt. Mit dieser Ausgestaltung lässt sich die Verpackungs-Verbundfolie beispielsweise zur Informationsvermittlung im Rahmen eines Gewinnspiels verwenden. Unter dem lösbaren Teil der Deckbahn befindet sich dann beispielsweise eine Gewinnspielinformation in Form einer Ziffern- und/oder Zahlenkombination, die vor dem Entfernen des lösbaren Teils der Deckbahn nicht zu erkennen ist. Derartige Gewinnspielinformationen werden manchmal an Produktverpackungen angebracht, um dem Käufer des Produkts die Teilnahme an dem Gewinnspiel zu ermöglichen. Dabei sollte die Teilnahme aber tatsächlich nur dem Käufer des Produkts ermöglicht werden. Bei der Verpackungs-Verbundfolie kann man am Zustand der Materialschwächung leicht erkennen, ob sich ein Dritter unberechtigterweise Zugang zu der unter der Deckbahn platzierten Gewinnspielinformation verschafft hat. Ist die Materialschwächung noch im Urzustand, kann dies ausgeschlossen werden. Durch die unter der Deckbahn verdeckte Platzierung der Gewinnspielinformation kann außerdem auch ein von Betrügern bisweilen verwendetes maschinelles Erfassen einer Vielzahl an Gewinnspielinformationen von verschiedenen Verpackungen und eine daraus abgeleitete maschinelle Ermittlung des Lösungsworts des Gewinnspiels verhindert werden.

Eine weitere Aufgabe der Erfindung besteht darin, eine Verpackung anzugeben, die sich einfach herstellen lässt und die mit einer Zusatzfunktion ausgestattet ist.

Diese weitere Aufgabe wird durch eine Verpackung gemäß den Merkmalen des Anspruchs 9 gelöst. Die erfindungsgemäße Verpackung umfasst eine Verpackungs-Verbundfolie gemäß der vorstehend beschriebenen Grundausgestaltung oder einer deren vorteilhafter Ausgestaltungen, wobei die Trägerbahn insbesondere dem Verpackungsgut zugewandt ist und vorzugsweise die Verpackungsinnenseite der Verpackung bildet. Dementsprechend ist die Deckbahn insbesondere vom Verpackungsgut abgewandt und bildet vorzugsweise die Verpackungsaußenseite. Mittels Umlegen und/oder Umfalten von Bereichen der Verpackungs-Verbundfolie und mittels Versiegeln mindestens eines Randbereichs der Verpackungs-Verbundfolie ist ein Beutel gebildet, wobei die Verpackungs-Verbundfolie zuvor bei Bedarf auch noch zugeschnitten werden kann. Weiterhin bildet der Bereich mit der in der ersten Haftvermittlungsschicht vorgesehenen Aussparung eine Funktionszone des Beutels. Die Verpackung weist im Wesentlichen die gleichen Eigenschaften, Vorteile und Ausgestaltungen auf, die vorstehend bereits im Zusammenhang mit der Verpackungs-Verbundfolie beschrieben worden sind.

Weitere vorteilhafte Ausgestaltungen der Verpackung ergeben sich aus den Merkmalen der von Anspruch 9 abhängigen Ansprüche.

Günstig ist eine Ausgestaltung, bei der eine Verpackungsöffnung vorgesehen ist und die Funktionszone eine Wiederverschlusszone ist, die insbesondere von der Verpackungsöffnung beabstandet angeordnet ist. Die Verpackungsöffnung ist beispielsweise durch Abtrennen, insbesondere Aufreißen oder Abschneiden, eines Teils der Verpackung gebildet. Aufgrund des Abstands zwischen der Verpackungsöffnung und der Wiederverschlusszone ergibt sich eine gute Barriereeigenschaft, die bei konventionellen wieder verschließbaren Verpackungen mit einem Klebeetikett so nicht oder zumindest nicht ohne weiteres erreicht wird. Gerade bei Lebensmittelverpackungen ist es aus hygienischen Gründen unerwünscht, dass das Klebetikett mit dem in der Verpackung befindlichen Lebensmittel in Kontakt kommt - und sei es nur am Rand der Verpackungsöffnung. Deshalb sind bei konventionellen mit einem Klebeetikett wieder verschließbaren Verpackungen Zusatzmaßnahmen erforderlich, um überhaupt eine ausreichende Barriereeigenschaft zu erreichen. Bei der hier beschriebenen Verpackung ergibt sich eine sogar verbesserte Barriereeigenschaft im Wesentlichen nur aufgrund der verwendeten besonderen Verpackungs-Verbundfolie und der von der Verpackungsöffnung beabstandeten Anordnung der Wiederverschlusszone. Die im Bereich der in der ersten Haftvermittlungszone vorgesehenen Aussparung angeordnete zweite Haftvermittlungsschicht liefert die Haftkraft für das Wiederverschließen der Verpackung. Die zweite Haftvermittlungsschicht ist also insbesondere nur innerhalb der Wiederverschlusszone und damit entfernt von der Verpackungsöffnung angeordnet. Weitere Zusatzmaßnahmen, um das Verpackungsgut sicher von der insbesondere klebenden Wiederverschlusszone fern zu halten, sind hier nicht erforderlich.

Günstig ist eine weitere Ausgestaltung, bei der die Funktionszone eine bedruckte Informationszone ist. Die Informationszone kann dann beispielsweise im Rahmen des im Zusammenhang mit einer günstigen Ausgestaltung der Verpackungs-Verbundfolie vorstehend beschriebenen Gewinnspiels zur verdeckten Platzierung der Gewinnspielinformation zum Einsatz kommen.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel einer Verpackungs-Verbundfolie mit einer bereichsweise lösbaren Deckbahn in einer Schnittdarstellung,
- Fig. 2: ein weiteres Ausführungsbeispiel einer Verpackungs-Verbundfolie mit einer bereichsweise lösbaren Deckbahn in einer Draufsicht auf den Bereich mit der lösbaren Deckbahn,
- Fig. 3: den kompletten Zuschnitt zur Herstellung einer Verpackung aus der Verpackungs-Verbundfolie gemäß Fig. 2 in Draufsicht,
- Fig. 4: eine aus dem Zuschnitt gemäß Fig. 3 hergestellte Verpackung in geöffnetem Zustand,
- Fig. 5: eine aus dem Zuschnitt gemäß Fig. 3 hergestellte Verpackung in wiederverschlossenem Zustand,
- Fig. 6: ein Ausführungsbeispiel einer Verpackungs-Verbundfolie mit einer bereichsweise lösbaren Deckbahn in einer Schnittdarstellung, und
- Fig. 7: die Verpackungs-Verbundfolie gemäß Fig. 6 mit teilweise entfernter Deckbahn.

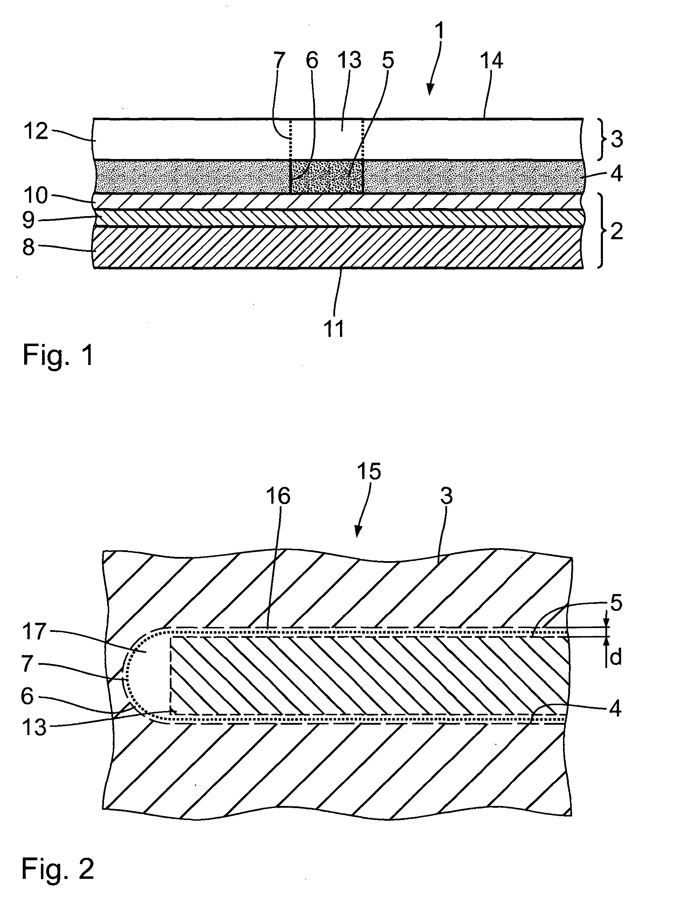

Einander entsprechende Teile sind in den Fig. 1 bis 7 mit denselben Bezugszeichen versehen. Auch Einzelheiten der im Folgenden näher erläuterten Ausführungsbeispiele können für sich genommen eine Erfindung darstellen oder Teil eines Erfindungsgegenstandes sein.

In Fig. 1 ist ein Ausführungsbeispiel einer Verpackungs-Verbundfolie 1 in einem Querschnitt senkrecht zur Folienhauptfläche gezeigt. Die Verpackungs-Verbundfolie 1 hat einen mehrschichtigen Aufbau mit einer Trägerbahn 2 und einer Deckbahn 3, die mittels einer ersten Haftvermittlungsschicht 4 und einer zweiten Haftvermittlungsschicht 5 miteinander verbunden sind. Dabei ist die zweite Haftvermittlungsschicht 5 innerhalb einer in der ersten Haftvermittlungsschicht 4 vorgesehenen Aussparung 6 angeordnet. Die beiden Haftvermittlungsschichten 4 und 5 liegen in einer gemeinsamen Ebene und bilden eine kombinierte Verbindungsschicht zwischen der Trägerbahn 2 und der Deckbahn 3.

Allerdings unterscheiden sich die Haftvermittlungsschichten 4 und 5 in ihren Eigenschaften voneinander. Insbesondere ist die Haftkraft der zweiten Haftvermittlungsschicht 5 geringer als diejenige der ersten. Mittels der ersten Haftvermittlungsschicht 4 ist eine feste, insbesondere nur schwer lösbare oder praktisch unlösbare, Verbindung zwischen der Trägerbahn 2 und der Deckbahn 3 gebildet. Die zwischen der Tragfläche 2 und der Deckbahn 3 gegebene feste Verbindung mit einer hohen Verbundhaftung von vorzugsweise mindestens 1 N/15 mm liegt abgesehen vom Bereich mit der Aussparung 6 vollflächig vor. Dagegen ist die mittels der zweiten Haftvermittlungsschicht 5 innerhalb der Aussparung 6 gebildete Verbindung zwischen der Trägerbahn 2 und der Deckbahn 3 lösbar. Die zweite Haftvermittlungsschicht 5 bedeckt eine insbesondere erheblich kleinere Fläche der Trägerbahn 2 als die erste Haftvermittlungsschicht 4. Die Deckbahn 3 enthält im Bereich der Aussparung 6, insbesondere genau über dem Rand dieser Aussparung 6, eine Materialschwächung 7 in Form einer gestanzten Perforation. Bei dem in Fig. 1 gezeigten Ausführungsbeispiel stimmen die Stanzungen zur Herstellung der Materialschwächung 7 zumindest weitgehend mit der Grenze der Aussparung 6 überein.

Beim in Fig. 1 gezeigten Ausführungsbeispiel grenzen die beiden Haftvermittlungsschichten 4 und 5 unmittelbar aneinander an. Dies ist nicht zwingend. Bei einer alternativen Ausgestaltung kann zwischen den beiden Haftvermittlungsschichten 4 und 5 auch ein haftstofffreier Zwischenraum vorgesehen sein.

Die Trägerbahn 2 der in Fig. 1 gezeigten Verpackungs-Verbundfolie 1 ist mehrschichtig aufgebaut. Sie enthält eine Kunststoff-Trägerfolie 8 aus orientiertem Polypropylen mit einer Dicke von insbesondere zwischen 36 µm und 50 µm, die bei dem gezeigten Ausführungsbeispiel bei etwa 40 µm liegt. Auf der Kunststoff-Trägerfolie 8 ist eine Barrierebeschichtung 9 angeordnet, die beim Ausführungsbeispiel aus Aluminium besteht. Sie kann alternativ auch aus anderen Materialien, beispielsweise aus SiOₓ, ausgeführt sein.

Auf der Barrierebeschichtung 9 ist eine Bedruckungsschicht 10 mit einem Primer und Druckfarbe angeordnet, wobei der Primer nur optional ist. Die Trägerbahn 2 ist mit der von der Barrierebeschichtung 9 abgewandten Oberfläche der Bedruckungsschicht 10 den beiden Haftvermittlungsschichten 4 und 5 zugewandt. Die Oberfläche der Kunststoff-Trägerfolie 8, die auf der von der Barrierebeschichtung 9 abgewandten Seite der Kunststoff-Trägerfolie 8 angeordnet ist, bildet eine freie Oberfläche 11 sowohl der Trägerbahn 2 als auch - zumindest beim gezeigten Ausführungsbeispiel - der Verpackungs-Verbundfolie 1 insgesamt. Die Kunststoff-Trägerfolie 8 ist gegen sich selbst siegelfähig. Die Oberfläche 11 kann also beispielsweise bei der Herstellung einer Verpackung aus der Verpackungs-Verbundfolie 1 unmittelbar zur Versiegelung herangezogen werden. Eine grundsätzlich ebenfalls mögliche zusätzliche Beschichtung mit einem siegelfähigen Material ist beim in Fig. 1 gezeigten Ausführungsbeispiel nicht erforderlich.

Die Deckbahn 3 ist beim in Fig. 1 gezeigten Ausführungsbeispiel einschichtig aus einer Kunststoff-Deckfolie 12 ausgebildet. Grundsätzlich kann aber auch für die Deckbahn ein mehrschichtiger Aufbau vorgesehen sein. Die Kunststoff-Deckfolie 12 ist eine PET-Folie mit einer Dicke von insbesondere zwischen 6 µm und 23 µm, die beim gezeigten Ausführungsbeispiel etwa 15 µm beträgt.

Die erste Haftvermittlungsschicht 4 ist ein Kaschierkleber auf Basis von Polyester-Polyurethan.

Die zweite Haftvermittlungsschicht 5 ist eine Kaltsiegelbeschichtung, die beim gezeigten Ausführungsbeispiel auf Basis von Naturlatex.

Die zweite Haftvermittlungsschicht 5 haftet lösbar an beiden Seiten der Deckbahn 3. Damit lässt sich zum einen der von der Materialschwächung 7 umgebene Teil 13 der Deckbahn 8 entfernen, und zum anderen die freie Oberfläche 14 der Deckbahn 3 an der nach dem Entfernen des Teils 13 freiliegenden zweiten Haftvermittlungsschicht 5 wiederum lösbar anheften oder ankleben.

In Fig. 2 ist ein anderes Ausführungsbeispiel einer Verpackungs-Verbundfolie 15 mit einer ebenfalls bereichsweise lösbaren Deckbahn 3 dargestellt. Gezeigt ist eine Draufsicht auf den Ausschnitt der Verpackungs-Verbundfolie 15 mit dem entfernbaren Teil 13 der Deckbahn 3. Die Deckbahn 3 ist bei dem in Fig. 2 gezeigten Ausführungsbeispiel durchsichtig, so dass die darunter angeordneten beiden Haftvermittlungsschichten 4 und 5 ebenso wie die Aussparung 6 zu erkennen sind. Der Aufbau der Verpackungs-Verbundfolie 15 ist im Wesentlichen gleich wie derjenige der zuvor beschriebenen Verpackungs-Verbundfolie 1.

Ein Unterschied besteht darin, dass zwischen der ersten Haftvermittlungsschicht 4 und der zweiten Haftvermittlungsschicht 5 ein haftstofffreier Zwischenraum 16 angeordnet ist, in dessen Bereich auch die Materialschwächung 7 verläuft. Ein haftstofffreier Abstand d zwischen den beiden Haftvermittlungsschichten 4 und 5 beträgt beim in Fig. 2 gezeigten Ausführungsbeispiel etwa 2 mm. Darüber hinaus ist unter einem als Abreißlasche 7 dienenden Teil der Deckbahn 3 innerhalb der Aussparung 6 ebenfalls eine haftstofffreie Zone vorgesehen. Die Kontur der Materialschwächung 7 folgt der Kontur der Aussparung 6, wobei die Materialschwächung 7 im Bereich mit dem engen haftstofffreien Zwischenraum 16 in etwa mittig zwischen den beiden Haftvermittlungsschichten 4 und 5 verläuft.

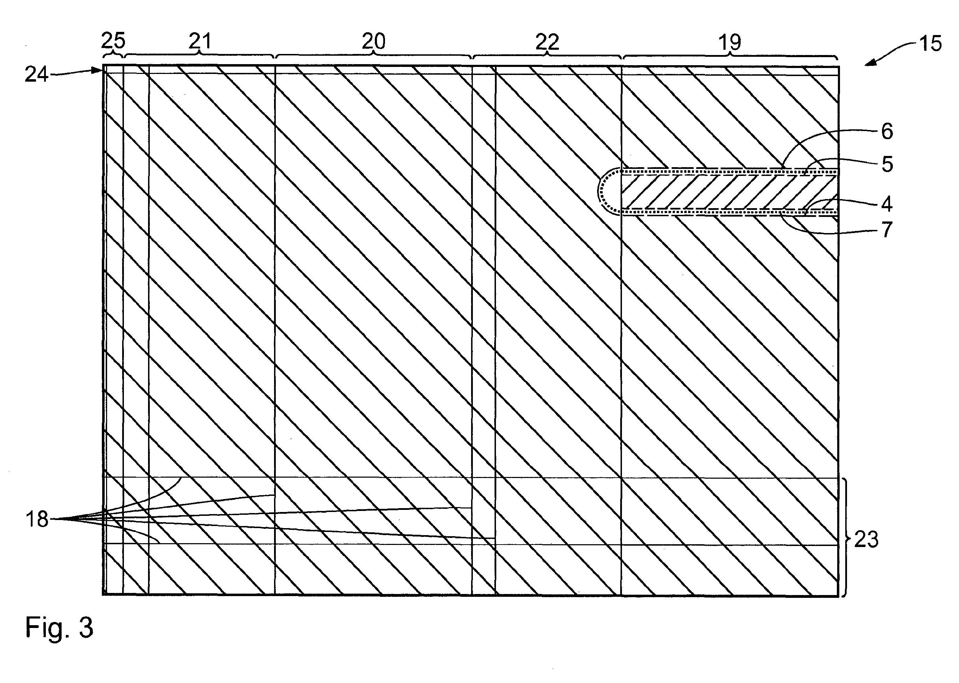

In Fig. 3 ist der zur Herstellung einer Verpackung benötigte komplette Zuschnitt der in Fig. 2 nur ausschnittsweise gezeigten Verpackungs-Verbundfolie 15 gezeigt. Mit eingetragen sind (fiktive) Falt- bzw. Biegelinien 18. Dadurch ergeben sich verschiedene Teilbereiche des Zuschnitts, so z. B. für eine Verpackungsvorderseite 19, eine Verpackungsrückseite 20, zwei Verpackungsschmalseiten 21 und 22 sowie einen Verpackungsbodenbereich 23. Außerdem sind Siegelzonen 24 und 25 vorgesehen, innerhalb derer ebenso wie teilweise innerhalb des Verpackungsbodenbereichs 23 während der Herstellung der Verpackung eine Versiegelung erfolgt.

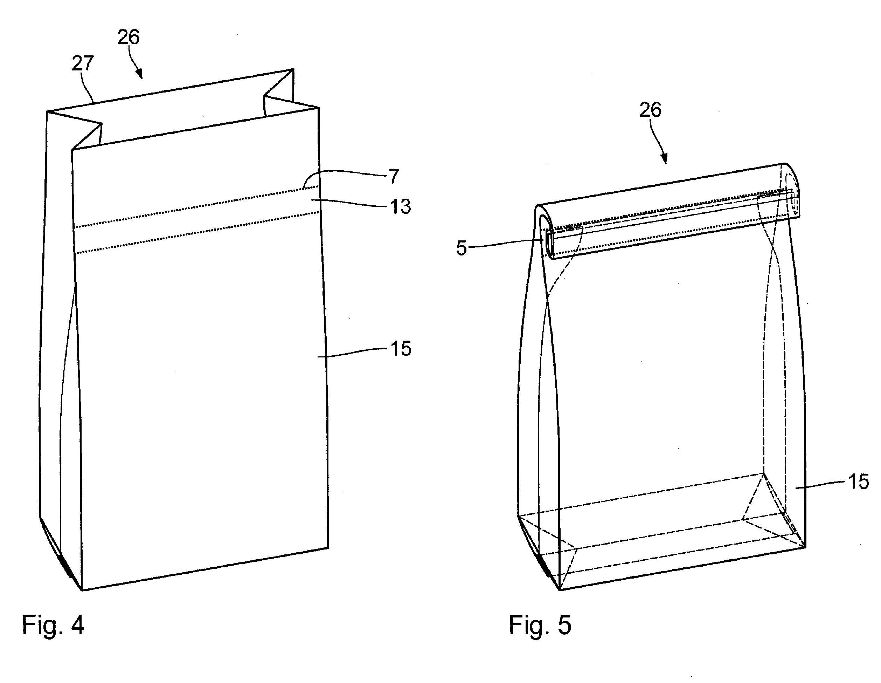

In den Fig. 4 und 5 sind perspektivische Darstellungen einer aus der Verpackungs-Verbundfolie 15 hergestellten Verpackung 26 gezeigt. In Fig. 4 ist die Verpackung 26 im geöffneten Zustand dargestellt. Eine Verpackungsöffnung 27 ist dabei durch Abtrennen eines oberen Verpackungsrandes gebildet. Der entfernbare Teil 13 der Deckbahn 3 ist beabstandet zur Verpackungsöffnung 27 angeordnet. Der Teil 13 mit der entfernbaren Deckbahn 3 bildet eine Wiederverschlusszone, deren Funktion durch Entfernen des Teils 13 der Deckbahn 3 aktiviert werden kann.

Die geöffnete Verpackung 26 lässt sich dann nämlich durch Umlegen des geöffneten oberen Verpackungsrands und durch Ankleben des umgelegten Randes an die nach Entfernen des Teils 13 der Deckbahn 3 freiliegende zweite Haftvermittlungsschicht 5 wieder verschließen. Der wiederverschlossene Zustand ist in Fig. 5 dargestellt.

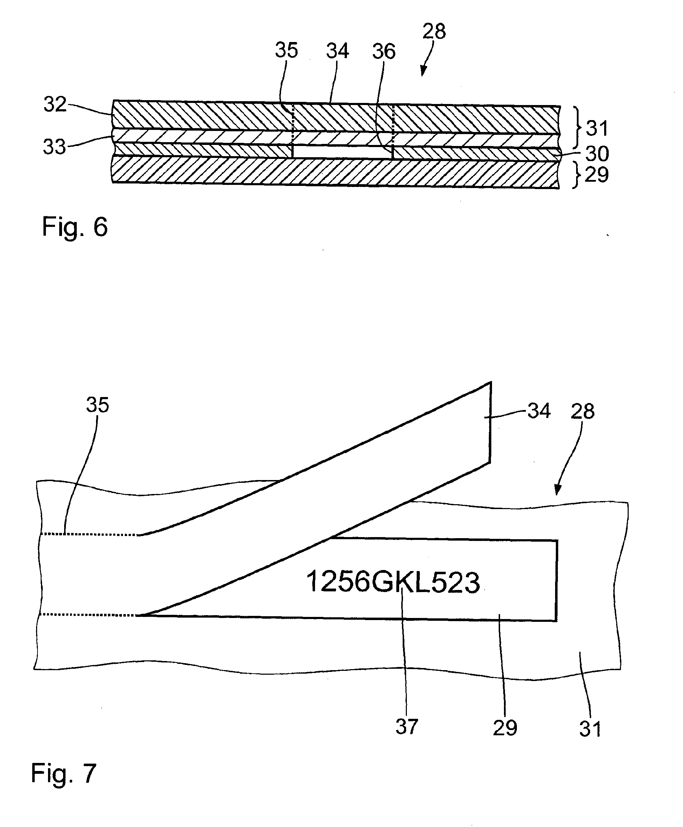

In Fig. 6 ist ein weiteres Ausführungsbeispiel einer Verpackungs-Verbundfolie 28 mit einem Schichtaufbau aus einer Trägerbahn 29, einer auf der Trägerbahn 29 angeordneten Haftvermittlungsschicht 30 sowie einer auf der Haftvermittlungsschicht 30 angeordneten Deckbahn 31 dargestellt. Die Trägerbahn 29 ist bei diesem Ausführungsbeispiel einschichtig als Kunststoff-Trägerfolie ausgebildet, wohingegen für die Deckbahn 31 ein mehrschichtiger Aufbau aus einer Kunststoff-Deckfolie 32 und einer darauf angebrachten Druckfarbenbeschichtung 33 vorgesehen ist. Die Druckfarbenbeschichtung 33 ist auf der der Haftvermittlungsschicht 30 zugewandten Seite der Kunststoff-Deckfolie 32 aufgebracht. Aufgrund dieser Druckfarbenbeschichtung 33 ist die Deckbahn 31 undurchsichtig. Dies gilt insbesondere für einen entfernbaren Teil 34 der Deckbahn 31. Der entfernbare Teil 34 ist durch eine gestanzte Materialschwächung 35 innerhalb der Deckbahn 31 gebildet. Außerdem ist in der Haftvermittlungsschicht 30 eine Aussparung 36 vorgesehen, deren Ränder mit dem Verlauf der Materialschwächung 35 im Wesentlichen übereinstimmen. Bei der Verpackungs-Verbundfolie 28 bleibt die Aussparung 36 vollständig haftstofffrei. In diesem Bereich besteht also keine Haftung zwischen der Deckbahn 31 und der Trägerbahn 29. In allen übrigen Bereichen sind die Trägerbahn 29 und die Deckbahn 31 mittels der Haftvermittlungsschicht 30 fest miteinander verbunden. Insofern bestehen keine Unterschiede zu den vorher beschriebenen Ausführungsbeispielen der Verpackungs-Verbundfolien 1 und 15.

Im Bereich der Aussparung 36 ist die der Deckbahn 31 zugewandte Oberfläche der Trägerbahn 29 mit einer Information 37 versehen. Die Information 37 ist im Ausführungsbeispiel eine im Bereich der Aussparung 36 auf die Trägerbahn 29 aufgedruckten Ziffern-/Buchstabenkombination. Diese Ziffern-/Buchstabenkombination ist nur dann zu erkennen, wenn der Teil 34 der Deckbahn 31, wie in Fig. 7 dargestellt, angehoben oder entfernt wird. Im Urzustand der Verpackungs-Verbundfolie 28 kann die Information 37 aufgrund der blickdichten Ausgestaltung der Deckbahn 31 dagegen nicht erkannt werden.

Die Verpackungs-Verbundfolie 28 kann außer zur Verpackung eines Gutes auch für ein Gewinnspiel verwendet werden. Hierbei stellt die zunächst unter dem entfernbaren Teil 34 der Deckbahn 31 verborgene Information 37 ein mögliches Lösungswort für das Gewinnspiel dar. Günstig ist dabei, dass die Information 37 nicht für jedermann frei zugänglich ist, sondern nur für eine Person, die berechtigt ist, das Teil 34 der Deckbahn 31 zu entfernen. Hierbei handelt es sich insbesondere um den Käufer der mittels der Verpackungs-Verbundfolie 28 verpackten Ware. Bei diesem Anwendungsfall stellt der Bereich der Verpackungs-Verbundfolie 28 mit der in der Aussparung 36 zunächst verborgen angeordneten Information 37 eine Informationszone dar.

Die Haftstofffreiheit der Aussparung 36 ist nicht zwingend. Bei alternativen nicht gezeigten Ausgestaltungen kann innerhalb der Aussparung 36 - ähnlich wie bei den Verpackungs-Verbundfolien 1 und 15 - eine zweite Haftvermittlungsschicht mit verglichen mit der Haftvermittlungsschicht 30 niedrigerer Klebekraft angeordnet sein. Die Information 37 kann dann bei einer transparent ausgestalteten zweiten Haftvermittlungsschicht nach wie vor auf der Trägerbahn 29 platziert sein. Alternativ kann die Information 37 aber z.B. auch an der Unterseite, d.h. an der der Trägerbahn 29 zugewandten Seite des entfernbaren Teils 34 der Deckbahn 31 platziert sein.

Bei dem im Rahmen der Fig. 6 und 7 beschriebenen Ausführungsbeispiel und bei dem zuvor im Rahmen der Fig. 2 bis 5 beschriebenen Ausführungsbeispiel ist es vorteilhaft, dass die Zusatzfunktionen der Informationszone bzw. der Wiederverschlusszone ohne zusätzliche Komponenten allein mit den ohnehin vorgesehenen Bestandteilen der jeweiligen Verpackungs-Verbundfolien 28 bzw. 15 realisiert werden. Dies reduziert die Herstellungskosten, die zur Schaffung dieser Zusatzfunktionen anfallen.

## Patentansprüche

1. Verpackungs-Verbundfolie umfassend einen Schichtaufbau mit mindestens
a) einer Trägerbahn (2; 29),
b) einer ersten Haftvermittlungsschicht (4; 30) und
c) einer Deckbahn (3; 31),
wobei
d) die erste Haftvermittlungsschicht (4; 30) eine Aussparung (6; 36) aufweist,
e) die Deckbahn (3; 31) mittels der ersten Haftvermittlungsschicht (4; 30) abgesehen von der Aussparung (6; 36) vollflächig und fest auf der Trägerbahn (2; 29) angebracht ist,
f) im Bereich der in der ersten Haftvermittlungsschicht (4) vorgesehenen Aussparung (6) zumindest teilweise eine zweite Haftvermittlungsschicht (5) vorgesehen ist, die eine geringere Haftkraft aufweist als die erste Haftvermittlungsschicht (4) und die lösbar an beiden Seiten der Deckbahn (3; 31) haften kann,
g) die Deckbahn (3; 31) im Bereich der in der ersten Haftvermittlungsschicht (4; 30) vorgesehenen Aussparung (6; 36) lösbar auf der Trägerbahn (2; 29) platziert ist und die Deckbahn (3; 31) im Bereich der in der ersten Haftvermittlungsschicht (4; 30) vorgesehenen Aussparung (6; 36) eine Materialschwächung (7; 35) auf-weist, so dass ein im Bereich der in der ersten Haftvermittlungsschicht (4; 30) vorgesehenen Aussparung (6; 36) befindlicher Teil (13) der Deckbahn (3; 31) vollständig von der übrigen Deckbahn (3; 31) und von der Trägerbahn (2; 29) entfernbar ist, und eine freie Oberfläche (14) der Deckbahn (3; 31) an der nach dem Entfernen des Teils (13) der Deckbahn (3; 31) freiliegenden und auf der Trägerbahn (2; 29) verbliebenen zweiten Haftvermittlungsschicht (5) wiederum lösbar anheftbar ist.

2. Verpackungs-Verbundfolie nach Anspruch 1, **dadurch gekennzeichnet, dass** die Trägerbahn (2; 29) eine Trägerfolie (8) aus Aluminium oder aus einem Kunststoff ist oder die Trägerbahn (2; 29) eine solche Trägerfolie (8) umfasst, wobei der Kunststoff ein Polypropylen, insbesondere ein mono- oder biaxial orientiertes oder ein coextrudiertes Polypropylen oder ein cast-Polypropylen, ein Polyester, insbesondere ein mono- oder biaxial orientiertes oder ein coextrudiertes Polyester, ein Polyamid, insbesondere ein mono- oder biaxial orientiertes oder ein coextrudiertes Polyamid, ein Polylactid, insbesondere ein mono- oder biaxial orientiertes und ein coextrudiertes Polylactid, ein Polyethylen, ein Polyvinylalkohol, ein Zellglas oder ein stärkebasierter oder stärkegefüllter Kunststoff ist.

3. Verpackungs-Verbundfolie nach Anspruch 1 oder 2, **dadurch gekennzeichnet, dass** die Trägerbahn (2; 29) auf der von der Deckbahn (3; 31) abgewandten Seite gegen sich selbst siegelfähig ist oder mit einem siegelfähigen Belag, insbesondere in Form einer Extrusionsbeschichtung, Lackierung oder einer kaschierten Folie, versehen ist.

4. Verpackungs-Verbundfolie nach einem der vorhergehenden Ansprüche, **dadurch gekennzeichnet, dass** die Deckbahn (3; 31) eine Deckfolie (12; 32) aus einem Kunststoff ist oder eine solche Deckfolie (12; 32) umfasst, wobei der Kunststoff ein Polypropylen, insbesondere ein mono- oder biaxial orientiertes oder ein coextrudiertes Polypropylen oder ein cast-Polypropylen, ein Polyester, insbesondere ein mono- oder biaxial orientiertes oder ein coextrudiertes Polyester, ein Polyamid, insbesondere ein mono- oder biaxial orientiertes oder ein coextrudiertes Polyamid, ein Polylactid, insbesondere ein mono- oder biaxial orientiertes und ein coextrudiertes Polylactid, ein Polyvinylalkohol, ein Zellglas oder ein stärkebasierter oder stärkegefüllter Kunststoff ist, und wobei die Deckfolie (12; 32) insbesondere dünner ist als die Trägerbahn (2; 29) und insbesondere eine Dicke zwischen 3 µm und 100 µm, bevorzugt zwischen 8 µm und 36 µm, und äußerst vorzugsweise zwischen 12 µm und 23 µm hat.

5. Verpackungs-Verbundfolie nach einem der vorhergehenden Ansprüche, **dadurch gekennzeichnet, dass** die erste Haftvermittlungsschicht (4) aus oder mit einem ersten Klebstoff gebildet ist, und die zweite Haftvermittlungsschicht (5) aus oder mit einem zweiten Klebstoff gebildet ist, wobei der erste und der zweite Klebstoff eine gleiche Grundsubstanz aufweisen und der zweite Klebstoff mit mindestens einem die Haftfähigkeit reduzierenden Zusatzstoff versehen ist.

6. Verpackungs-Verbundfolie nach einem der vorhergehenden Ansprüche, **dadurch gekennzeichnet, dass** zwischen der ersten und der zweiten Haftvermittlungsschicht (4, 5) ein haftstofffreier Zwischenraum (16) vorgesehen ist, wobei zumindest teilweise zwischen der ersten und der zweiten Haftvermittlungsschicht (4, 5) ein haftstofffreier Abstand (d) von insbesondere 0,5 mm bis 3 mm gebildet ist.

7. Verpackungs-Verbundfolie nach einem der vorhergehenden Ansprüche, **dadurch gekennzeichnet, dass** die Materialschwächung (7; 35) der Deckbahn (3; 31) in Form von insbesondere gestanzten oder gelaserten Ausnehmungen ausgebildet ist.

8. Verpackungs-Verbundfolie nach einem der vorhergehenden Ansprüchen, **dadurch gekennzeichnet, dass** in dem Bereich der in der ersten Haftvermittlungsschicht (30) vorgesehenen Aussparung (36) an einer der Deckbahn (31) zugewandten Seite der Trägerbahn (29) oder an einer der Trägerbahn (29) zugewandten Seite der Deckbahn (31) eine Bedruckung (37) vorgesehen ist, und die Deckbahn (31) zumindest in dem Bereich der Bedruckung (37) undurchsichtig, insbesondere geschwärzt oder geweißt, ist.

9. Verpackung mit
a) einer Verpackungs-Verbundfolie (1; 15; 28) nach einem der vorhergehenden Ansprüche, wobei
b) mittels Umlegen oder Umfalten von Bereichen der Verpackungs-Verbundfolie (1; 15; 28) und mittels Versiegeln mindestens eines Randbereichs (23, 24, 25) der Verpackungs-Verbundfolie (15) ein Beutel gebildet ist,
c) der Bereich mit der in der ersten Haftvermittlungsschicht (4; 30) vorgesehenen Aussparung (6) eine Funktionszone des Beutels bildet.

10. Verpackung nach Anspruch 9 **dadurch gekennzeichnet, dass** eine Verpackungsöffnung (27) vorgesehen ist und die Funktionszone eine Wiederverschlusszone ist, die insbesondere von der Verpackungsöffnung (27) beabstandet angeordnet ist.

11. Verpackung nach Anspruch 9 oder 10 **dadurch gekennzeichnet, dass** die Funktionszone eine bedruckte Informationszone ist.

## Claims

1. Packaging composite film having a layer structure comprising at least
a) a carrier layer (2; 29),
b) a first adhesive layer (4; 30) and
c) a cover layer (3; 31),
wherein
d) the first adhesive layer (4; 30) comprises a cut-out (6; 36),
e) the cover layer (3; 31) is applied securely onto the carrier layer (2; 29) over the full surface by means of the first adhesive layer (4; 30) apart from the cut-out (6; 36),
f) in the region of the cut-out (6) provided in the first adhesive layer (4) at least partly a second adhesive layer (5) is provided which has a weaker adhesive force than the first adhesive layer (4) and which can adhere detachably on both sides of the cover layer (3; 31),
g) the cover layer (3; 31) is placed detachably on the carrier layer (2; 29) in the area of the cut-out (6; 36) provided in the first adhesive layer (4; 30) and the cover layer (3; 31) in the area of the cut-out (6; 36) provided in the first adhesive layer (4; 30) has a material weakening (7; 35), so that a portion (13) of the cover layer (3; 31) located in the area of the cut-out (6; 36) provided in the first adhesive layer (4; 30) can be removed completely from the other cover layer (3; 31) and from the carrier layer (2; 29), and a free surface (14) of the cover layer (3; 31) can be adhered detachably to the second adhesive layer (5) exposed after the removal of part (13) of the cover layer (3; 31) and remaining on the carrier layer (2; 29).

2. Packaging composite film according to claim 1, **characterised in that** the carrier layer (2; 29) comprises a carrier film (8) made of aluminium or plastic or the carrier layer (2; 29) comprises such a carrier film (8), wherein the plastic is a polypropylene, in particular a mono or biaxially oriented or a coextruded polypropylene or a cast polypropylene, a polyester, in particular a mono or biaxially oriented or coextruded polyester, a polyamide, in particular a mono or biaxially oriented or a coextruded polyamide, a polylactide, in particular a mono or biaxially oriented and a coextruded polylactide, a polyethylene, a polyvinyl alcohol, a cellophane or a starch-based or starch-filled plastic.

3. Packaging composite film according to claim 1 or 2, **characterised in that** the carrier layer (2; 29) can be sealed against itself on the side facing away from the cover layer (3; 31) or is provided with a sealable lining, in particular in the form of an extrusion coating, paint or laminated film.

4. Packaging composite film according to one of the preceding claims, **characterised in that** the cover layer (3; 31) is a cover film (12; 32) made of plastic or comprises such a cover film (12; 32), wherein the plastic is a polypropylene, in particular a mono or biaxially oriented or a coextruded polypropylene or a cast polypropylene, a polyester, in particular a mono or biaxially oriented or a coextruded polyester, a polyamide, in particular a mono or biaxially oriented or a coextruded polyamide, a polylactide, in particular a mono or biaxially oriented and a coextruded polylactide, a polyvinyl alcohol, a cellophane or a starch-based or starch-filled plastic and wherein the cover film (12; 31) in particular is thinner than the carrier layer (2; 29) and in particular has a thickness of between 3 µm and 100 µm, preferably between 8 µm and 36 µm, and most preferably between 12 µm and 23 µm.

5. Packaging composite film according to one of the preceding claims, **characterised in that** the first adhesive layer (4) is made from or by a first adhesive, and the second adhesive layer (5) is made from or by a second adhesive, wherein the first and the second adhesive comprise the same basic substance and the second adhesive is provided with at least one additional substance reducing the adhesiveness.

6. Packaging composite film according to one of the preceding claims, **characterised in that** between the first and the second adhesive layer (4, 5) an adhesive-free space (16) is provided, wherein at least partly between the first and the second adhesive layer (4, 5) an adhesive-free distance (d) of in particular 0.5 mm to 3 mm is formed.

7. Packaging composite film according to one of the preceding claims, **characterised in that** the material weakening (7; 35) of the cover layer (3; 31) is in the form of in particular stamped or laser cut cut-outs.

8. Packaging composite film according to one of the preceding claims, **characterised in that** in the region of the cut-out (36) provided in the first adhesive layer (30) an imprint (37) is provided on a side of the carrier layer (29) facing the carrier layer (29) or on a side of the cover layer (31) facing the carrier layer (29) and the cover layer (31) is opaque at least in the area of the imprint (37), in particular is blackened or whitened.

9. Packaging comprising
a) a packaging composite film (1; 15; 28) according to one of the preceding claims, wherein
b) by turning or folding over areas of the packaging composite film (1; 15; 28) and by sealing at least one edge area (23, 24, 25) of the packaging composite film (15) a bag is formed,
c) the area with the cut-out (6) provided in the first adhesive layer (4; 30) forms a functional area of the bag.

10. Packaging according to claim 9, **characterised in that** a packaging opening (27) is provided and the functional area is a resealing zone which is arranged in particular spaced apart from the packaging opening (27).

11. Packaging according to claim 9 or 10, **characterised in that** the functional area is a printed information zone.

## Revendications

1. Feuille composite pour emballage comprenant une structure en couches comportant au moins
a) une bande support (2 ; 29)
b) une première couche de promotion de l'adhésion (4 ; 30) et
c) une bande de recouvrement (3 ; 31),
où
d) la première couche de promotion de l'adhésion (4 ; 30) présente un renfoncement (6 ; 36),
e) la bande de recouvrement (3 ; 31) est rapportée sur toute sa surface et solidement sur la bande support (2 ; 29), à l'exception du renfoncement (6 ; 36), au moyen de la première couche de promotion de l'adhésion (4 ; 30),
f) une deuxième couche de promotion de l'adhésion (5), qui présente une force d'adhésion inférieure à la première couche de promotion de l'adhésion (4) et qui peut adhérer, en pouvant être détachée, sur les faces de la bande de recouvrement (3 ; 31), est prévue au moins partiellement dans la zone du renfoncement (6) prévu dans la première couche de promotion de l'adhésion (4),
g) la bande de recouvrement (3 ; 31) est placée sur la bande support (2 ; 29), en pouvant être détachée dans la zone du renfoncement (6 ; 36) prévu dans la première couche de promotion de l'adhésion (4 ; 30) et la bande de recouvrement (3 ; 31) présente un affaiblissement de matière (7 ; 35) dans la zone du renfoncement (6 ; 36) prévu dans la première couche de promotion d'adhésion (4 ; 30), de sorte qu'une partie (13) de la bande de recouvrement (3 ; 31) se situant dans la zone du renfoncement (6 ; 36) prévu dans la première couche de promotion d'adhésion (4 ; 30) peut être totalement enlevée du reste de la bande de recouvrement (3 ; 31) et de la bande support (2 ; 29), et une surface libre (14) de la bande de recouvrement (3 ; 31) libérée après l'enlèvement de la partie (13) de la bande de recouvrement (3 ; 31) et sur la deuxième couche de promotion de l'adhésion (5) restante de la bande support (2 ; 29), peut de nouveau être adhérée en pouvant être détachée.

2. Feuille composite d'emballage selon la revendication 1 **caractérisée en ce que** la bande support (2 ; 29) comprend une feuille support (8) en aluminium ou dans une matière synthétique, ou que la bande support (2 ; 29) comprend une telle feuille support (8), la matière synthétique étant un polypropylène, en particulier, un polypropylène orienté mono- ou bi-axialement ou co-extrudé, ou un polypropylène cast, un polyester, en particulier, un polyester orienté mono- ou bi-axialement ou un polyester co-extrudé, un polyamide, en particulier , en particulier un polyamide orienté mono- ou bi-axialement ou un polyamide co-extrudé, un polylactide, en particulier, un polylactide orienté mono- ou biaxialement ou un polylactide co-extrudé, un polyéthylène, un alcool polyvinylique, un verre cellulaire ou une matière synthétique basée sur de l'amidon ou chargée d'amidon.

3. Feuille composite d'emballage selon les revendications 1 ou 2 **caractérisée en ce que** la bande support (2 ; 29) peut se sceller elle-même sur les faces opposées à la bande de recouvrement (3 ; 31) ou est munie d'un revêtement pouvant être scellé, notamment sous la forme d'un revêtement par extrusion, un laquage ou une feuille dissimulée.

4. Feuille composite d'emballage selon l'une des revendications précédentes **caractérisée en ce que** la bande de recouvrement (3 ; 31) est une feuille de recouvrement (12 ; 32) en matière synthétique ou comprend une telle feuille de recouvrement (12 ; 32), la matière synthétique étant un polypropylène, en particulier, un polypropylène orienté mono- ou biaxialement ou co-extrudé, ou un polypropylène cast, un polyester, en particulier, un polyester orienté mono-ou bi-axialement ou un polyester co-extrudé, un polyamide, en particulier, en particulier, un polyamide orienté mono- ou bi-axialement ou un polyamide co-extrudé, un polylactide, en particulier, un polylactide orienté mono- ou bi-axialement ou un polylactide co-extrudé, un polyéthylène, un alcool polyvinylique, un verre cellulaire ou une matière synthétique basée sur de l'amidon ou chargée d'amidon, et la feuille de recouvrement (12 ; 32) étant en particulier plus fine que la bande support (2 ; 29) et possédant en particulier une épaisseur entre 3 µm et 100 µm, de préférence entre 8 µm et 36 µm, et de manière particulièrement préférée entre 12 µm et 23 µm.

5. Feuille composite d'emballage selon l'une des revendications précédentes **caractérisée en ce que** la première couche de promotion de l'adhésion (4) est formée dans ou avec un premier adhésif, et la deuxième couche de promotion de l'adhésion (5) est formée dans ou avec un deuxième adhésif, le premier et le deuxième adhésifs présentant une même substance de base et le deuxième adhésif étant pourvu au moins d'un produit complémentaire avec une capacité adhésive réductrice.

6. Feuille composite d'emballage selon l'une des revendications précédentes **caractérisée en ce qu'**un espace intermédiaire (16), exempt d'adhésif, est prévu entre la première et la deuxième couche de promotion d'adhésion (4, 5), une espace exempt d'adhésif (d), en particulier de 0,5 mm à 3 mm, étant formé au moins partiellement entre la première et la deuxième couches de promotion de l'adhésion (4, 5).

7. Feuille composite d'emballage selon l'une des revendications précédentes **caractérisée en ce que** l'affaiblissement de matière (7 ; 35) de la bande de recouvrement (3 ; 31) est conçu sous la forme de renfoncements, en particulier emboutis ou créés par laser.

8. Feuille composite d'emballage selon l'une des revendications précédentes **caractérisée en ce qu'**une impression (37) est prévue sur une face de la bande support (29) orientée vers la bande de recouvrement dans la zone du renfoncement (36) prévu dans la première couche de promotion d'adhésion (30), ou sur une face de la bande de recouvrement (31) orientée vers la bande support (29), et la bande de recouvrement (31) est transparente, en particulier noircie ou blanchie au moins dans la zone de l'impression (37).

9. Emballage comprenant
a) une feuille composite d'emballage (1 ; 15 ; 28) selon l'une des revendications précédentes, où
b) un sachet est formé au moyen d'un retournement ou d'un repliement de parties de la feuille composite d'emballage (1 ; 15 ; 28) et au moyen d'un scellement d'au moins une zone de bordure (23, 24, 25) de la feuille composite d'emballage (15),
c) la zone avec le renfoncement (6) prévu dans la première couche de promotion d'adhésion (4 ; 30) constitue une zone de fonction du sachet.

10. Emballage selon la revendication 9 **caractérisée en ce qu'**une ouverture d'emballage (27) est prévue et que la zone de fonction est une zone de re-fermeture qui est en particulier espacée de l'ouverture de l'emballage (27).

11. Emballage selon les revendications 9 ou 10 **caractérisé en ce que** la zone de fonction est une zone d'information imprimée.
